# EUROPÄISCHE PATENTSCHRIFT

(11) **EP 4 277 120 B1**
(45) Veröffentlichungstag und Bekanntmachung des Hinweises auf die Patenterteilung: **13.08.2025**
(21) Anmeldenummer: 23172650.6
(22) Anmeldetag: 10.05.2023
(51) Int. Cl.: H02S 30/20

(54) **PHOTOVOLTAIKANLAGE**
PHOTOVOLTAIC ASSEMBLY
INSTALLATION PHOTOVOLTAÏQUE

(30) Priorität: 10.05.2022 CH 5502022
(43) Veröffentlichungstag der Anmeldung: 15.11.2023
(73) Patentinhaber: Brunhart, Walter, 02-0101 La Paz (BO)
(72) Erfinder: Brunhart, Walter, 02-0101 La Paz (BO)
(74) Vertreter: Swisspat Riederer Hasler Patentanwälte AG

(56) Entgegenhaltungen:
- DE-B4- 102015 121 200
- US-A1- 2013 186 450
- US-A1- 2019 006 984
- US-A1- 2021 083 618

## Beschreibung

### Gebiet der Erfindung

Diese vorliegende Erfindung betrifft eine Photovoltaikanlage gemäss Oberbegriff von Anspruch 1.

### Stand der Technik

Heutzutage existiert eine Vielzahl von verschiedenen Photovoltaikanlagen, die eine Nutzung der Flächen unter der Anlage erlaubt. So gibt es Photovoltaik (PV) Carport Lösungen, auch wurden schon Lösungen realisiert, bei denen Solarmodule auf abgespannten Seilen fest oder drehbar montiert sind. Alle diese Systeme benötigen einen hohen Materialeinsatz, da die Fläche der Solarmodule den Naturelementen ausgesetzt ist und daher für die extremen Witterungsbedingungen des jeweiligen Standorts ausgelegt werden muss. So können zum Beispiel in Mitteleuropa Windkräfte im Bereich von 800 - 1500 N/m2 auftreten, was bei einer Realisierung massive Fundamente und Trägersysteme benötigt.

Noch problematischer ist, wenn die Photovoltaikanlage in tropischen Ländern aufgestellt werden soll. Selbst gut verankerte Photovoltaikmodule würden Wirbelstürmen nicht standhalten.

Die Offenbarungsschrift WO2013/044404 (A1) zeigt ein System mit faltbaren PV-Modulen, welche bei ungünstigen Witterungsbedingungen (Schneefall, starker Wind) zusammengefaltet werden können. Bei dieser Lösung sind die Module zwischen zwei Seilen faltbar aufgehängt und werden mittels eines Antriebs bei guter Witterung ausgefahren, bzw. bei schlechter Witterung wieder eingefahren.

Faltbare Dächer, die bei widriger Witterung eingefahren sind, sind seit langem als Sonnenschutz und/oder Regenschutz bekannt und wurden auch schon mit Photovoltaikelementen ausgerüstet. Insgesamt benötigt auch dieser Anlagetyp noch relativ viel Stützmaterial und Verankerungen, da zur Aufnahme der Abspannkräfte die Tragestrukturen genügend stark ausgebildet sein müssen. Die WO2014/179893 (A1) zeigt ein weiteres System mit faltbaren PV-Modulen.

Die genannten Offenbarungsschriften zeigen Modulträger, die nicht trennbar miteinander verbunden sind, sowohl im ausgefahrenen wie im eingefahrenen Zustand. Durch Falten können diese aus einem ausgestreckten Zustand in einen gefalteten Zustand gebracht werden. Der Mechanismus zum Entfalten ist dabei relativ aufwendig. Eine Modulreinigung kann nur schwierig integriert werden. Ausserdem ergeben sich aus dem aufwendigen Aufbau relativ hohe Kosten für die Herstellung der Anlage und deren Wartung.

Die WO2019144248 offenbart eine ausfahrbare Photovoltaikanlage, bei welcher die Träger der Solarmodule im eingefahrenen Zustand übereinander gestapelt sind und für den Betrieb mittels eines Transfer- und eines Hebemechanismus ausgefahren werden können. Weiters ist die Anlage mit einer Steuerung ausgerüstet, die ihr erlaubt, die an den Trägern angeordneten Photovoltaikmodule bei widrigen Bedingungen einzufahren und übereinander zu stapeln.

Die US 2021/0083618 beschreibt in Fig. 7 einen Bausatz zum Bau einer Schutzvorrichtung, bestehend aus einem Behälter mit Lagerschienen und einer Gruppe von PV-Paneelen, die parallel zueinander in einer Lagerposition in dem Behälter angeordnet werden können. Die PV-Paneele liegen im Behälter auf Lagerschienen auf. Eine Tragstruktur umfasst eine Vielzahl von parallelen Tragschienen und eine Transfervorrichtung mit Transferschienen, wobei die Transferschienen die Lagerschienen mit den Tragschienen verbinden. Die PV-Paneele sind auf den Tragschienen entlang einer Montagerichtung verschiebbar. Im Betrieb können die Paneele aus der Lagerposition in eine Endposition überführt werden, in der alle Platten von den Tragschienen getragen werden.

Im Behälter sind obere und untere Lagerschienen vorgesehen, die baugleich sowohl miteinander als auch mit den Tragschienen und den Transferschienen sind und der Führung der PV-Paneele dienen. Nachteilig beim Bausatz der US 2021/0083618 gemäss Fig. 7 ist, dass sich die PV-Paneele im Container nicht störungsfrei abwickeln lassen und verklemmen, wenn versucht wird, die PV-Paneele aus dem Container zu ziehen.

### Aufgabe der Erfindung

Ziel der vorliegenden Erfindung ist es, eine Photovoltaikanlage zur Verfügung zu stellen, die einfach und kostengünstig herstellbar ist und einen störungsfreien Betrieb, auch bei schlechten Witterungsverhältnissen, gewährleistet, und sich insbesondere für den mobilen Einsatz eignet. Die Photovoltaikanlage sollte bei schlechten Witterungsbedingungen an einem geschützten Ort gelagert und bei guten Witterungsbedingungen ausfahrbar sein. Ausserdem sollen die Kernkomponenten der Photovoltaikanlage (PV-Module, Wechselrichter, Steuerung) schnell geschützt und transportiert werden können. Auch eine einfache Reinigung der PV-Module sollte möglich sein, weil in tropischen Gebieten die Module rasch verschmutzen können. Ein weiteres Ziel ist es, eine wartungskostenarme Anlage bereitzustellen.

### Beschreibung

Die genannte Aufgabe wird durch die im Patentanspruch 1 aufgeführten Merkmale gelöst. Vorteilhafte Weiterbildungen der Photovoltaikanlagen sind in den Unteransprüchen definiert.

Die erfindungsmässe Photovoltaikanlage verfügt über eine Mehrzahl von in einer Reihe anordenbaren und an einem Tragrahmen montierten Photovoltaikmodulen. Benachbarte Photovoltaikmodule mit ihren Tragrahmen sind mittels Gelenken oder Scharnieren gelenkig miteinander verbunden und von einem im Wesentlichen gestreckten und vorwiegend flachen, resp. zur Horizontalen leicht geneigten Zustand in einen zusammengeschobenen, kompakten Zustand und umgekehrt überführbar. Eine Antriebseinheit ermöglicht, die Photovoltaikmodule vom kompakten in den gestreckten Zustand und umgekehrt zu überführen.

Die Tragstruktur umfasst ein erstes Führungsschienenpaar aus zwei im Abstand voneinander angeordneten Führungsschienen. Seitlich an den Photovoltaikmodulen respektive an den Tragrahmen sind Führungselemente angeordnet, deren gegenseitiger Abstand voneinander mit dem Abstand der einander gegenüberliegenden Führungsschienen übereinstimmt.

An die Führungsschienen schliessen ein Wendeabschnitt und ein Lagerabschnitt an, wobei der Lagerabschnitt so bemessen ist, dass die Photovoltaikmodule senkrecht nebeneinander anordenbar sind und diesen im Wesentlichen ausfüllen. Der Wendeabschnitt ist ausgebildet, um einen Tragrahmen mit den daran angeordneten Photovoltaikmodule von der senkrechten in eine im Wesentlichen horizontale Lage zu überführen, und umgekehrt.

Erfindungsgemäss ist die beschriebene Photovoltaikanlage dadurch charakterisiert, dass die Tragrahmen im Lagerabschnitt frei hängend an den Führungsschienen angeordnet sind und die Führungselemente frei drehbare Laufräder und zusätzlich mindestens eine und vorzugsweise zwei frei drehbare Laufrollen (35) sind, deren Drehachsen (37) senkrecht zu einer durch die Führungsschienen (15) gehenden Ebene verlaufen und der seitlichen Führung der Photovoltaikmodule (13) am Laufwagen (25) dienen, so dass die Photovoltaikmodule mit nur geringem Rollwiderstand in Richtung der Führungsschienen ausgebreitet oder zusammengefahren werden können. Die beschriebene Anlage hat den Vorteil, dass sie sehr stabil ist, aus einfachen Komponenten aufgebaut ist und sich störungsfrei entfalten oder zusammenschieben lässt, weil sich die Tragrahmen mit den Photovoltaikmodulen bereits im Lagerabschnitt von der frei hängenden Lagerposition, wo die Tragrahmen mit den PV-Module senkrecht parallel zueinander angeordnet sind, über freie, undefinierte Winkel an die Vorwärtsbewegung der Tragrahmen anpassen lassen, und sich so den auftretenden Roll- und Fahrwiderständen der jeweiligen Laufräder und gegebenenfalls Laufrollen an den oberen Laufwagen anpassen, ausgleichen, nachrücken und in einem «stop and go» Modus undefiniert aufschliessen zum nächstvorderen Laufwagen, und sich über die ganze Länge der Einhausung frei abwickeln lassen. Dies im Gegensatz zur Anlage der US2021/0083618-Fig.7, wo die Paneele in der Lagerposition sowohl unten als auch oben seitlich geführt sind und deshalb nur ausserhalb des Containers abgewickelt werden können. Dies hat den grossen Nachteil, dass die in der Lagerposition senkrecht angeordneten Paneele nach vorne in eine bestimmte «Nullposition» geschoben werden müssen, damit sie sich störungsfrei abwickeln lassen. Andernfalls verklemmen sie sich an den oberen und unteren Schienen. Die Laufräder am Laufwagen können gegebenenfalls, wie bei der Antriebseinheit, durch Spurkranzräder ersetzt sein, wodurch die Laufrollen entfallen können.

Gemäss einer Ausführungsform können zwei benachbarte Tragrahmen jeweils über Scharniere miteinander verbunden sein. Diese können irgendwo zwischen zwei benachbarten Photovoltaikmodulen angeordnet sein, wobei die Laufräder lateral am Tragrahmen angeordnet sind.

Eine bevorzugte Ausführungsform sieht vor, dass zwei benachbarte Tragrahmen jeweils über einen und vorzugsweise zwei laterale Laufwagen gelenkig miteinander verbunden sind. Dies hat den Vorteil, dass die Schwenkachse zwischen zwei benachbarten Modulen verlaufen kann und ein Verschwenken erleichtert ist.

Vorteilhaft umfasst der Laufwagen einen Tragkörper und mindestens ein am Tragkörper angeordnetes Laufrad, dessen Drehachse waagrecht zu den und in der Ebene der Führungsschienen verläuft. Der Tragkörper kann beispielsweise ein rechteckförmiges Hohlprofil sein.

Zweckmässiger sind am Laufwagen mindestens ein Laufrad oder auch mehrere Laufräder, insbesondere zwei oder drei Laufräder, vorgesehen. Wenn zwei Laufräder vorgesehen sind, so hat dies den Vorteil, dass der Laufwagen auf den Führungsschienen gut abgestützt ist und ein leichteres, störungsfreies Aus- und Einfahren derPV-Module gegeben ist.

In einer vorteilhaften Ausführungsform stimmen die Drehachsen der Laufräder mit den Schwenkachsen der Photovoltaikmodule überein. Dies hat den Vorteil, dass die Photovoltaikmodulen an den Laufradachsen angeordnet werden können und der Herstellungsaufwand geringer ist.

Gemäss einer anderen Ausführungsform befinden sich die Schwenkachsen der Photovoltaikmodule parallel im Abstand von der Drehachse des Laufrades. Dies hat den Vorteil, dass die Tragrahmen in der ausgefahrenen Arbeitsposition einen spitzen Winkel zur Horizontalen einnehmen können.

Zweckmässigerweise sind die Führungsschienen als profilartige Träger ausgebildet, vorzugsweise als U-Profile, wobei die Öffnungen der U-Profile gegeneinander orientiert sind. Solche Profile sind kostengünstig auf dem Markt erhältlich.

Vorteilhaft sind die Führungsschienen U-Profile, wobei die Schenkel der U-Profile erste und zweite Laufbahnen für die Laufräder bilden. Dies hat den Vorteil, dass die Laufwagen alternierend auf der ersten und der zweiten Lauffläche angeordnet werden können. Dabei können im Betrieb die Schenkel des U-Profils mit den Laufwagen zusammenwirken und die Stirnseiten der Schenkel der U-Profile mit den Laufrollen bzw. Spurkranzrädern. Im Gegensatz zur Anlage der US2021/0083618, werden die Tragrahmen auf verschiedenen Ebenen (Laufflächen) des U-Profils geführt und nicht nebeneinander .Dies hat den Vorteil dass die Tragrahmen mit den PV-Modulen nicht horizontal, sondern leicht geneigt in ihrer ausgefahrenen Position ruhen. Dies hat den Vorteil, dass sich die PV-Module bei Regen selbst reinigen, da das Schmutzwasser abfliessen kann.

Verschmutztes Regenwasser kann über den höher gebauten Rahmen des PV-Schutzglases hinaus schwappen, und Verunreinigungen werden so abgeführt, während in horizontaler Lage das Wasser verdunsten und der Schmutz sich akkumulieren würde. Ein weiterer Vorteil ist der Raumgewinn in der Baubreite zwischen den Führungsschienen, vor allem, wenn die Baubreite wie bei einem Standard-Transportcontainer gegeben ist. So können wesentlich mehr verschiedene Standard PV-Module bei der Konstruktion und dem Bau der Anlage eingesetzt werden, was sich der Leistung in Watt pro m2 bemerkbar macht. Vorteilhaft sind in Richtung der Führungsschienen die Laufwagen alternierend auf der ersten und der zweiten Lauffläche angeordnet.

Vorteilhaft endet der Wendeabschnitt vor dem Lagerabschnitt, und es sind keine unteren Schienen vorgesehen, um die Photovoltaikmodule im Container zu führen. Dementsprechend können sich PV-Module beim Auseinanderziehen frei entfalten, und ein Verklemmen tritt nicht mehr auf.

Vorzugsweise ist das Profil der Weiche zumindest teilweise nach oben offen, sodass das Laufrad frei liegt. Dies hat den Vorteil, dass die Laufräder einen grossen Bewegungsspielraum haben, was ein Verklemmen der PV-Module beim Auseinanderziehen wirksam verhindert.

Vorteilhaft leitet zumindest der Einlauf in den Wendeabschnitt die zweite Laufbahn von der ersten Laufbahn weg- oder hin.

Gemäss einer vorteilhaften Ausführungsform ist ein Behälter, insbesondere ein Standard-Transportcontainer, vorgesehen, der mindestens die Länge des nötigen Lagerabschnitts für die vertikale Anordnung der Photovoltaikmodule aufweist. Dies hat den Vorteil, dass die ganze Anlage vor Unwettern gut geschützt werden kann. Auch kann der Standard-Transportcontainer mit Lastwagen, Schiffen oder Eisenbahn transportiert werden.

Vorteilhaft ist die Bauweise der Laufwagen so gewählt, dass diese beim Zusammenfahren die Tragrahmen der Photovoltaikmodule im Behälter parallel einordnen und die Schubkräfte der Positionierung am Laufwagen in Längsrichtung zu den Führungsschienen aufnehmen und bis zur Antriebseinheit weiterleiten.

Vorteilhaft sind die Führungsschienen auf in Abstand voneinander angeordneten Stützen montiert. Die Stützen können dabei einem solchen gegenseitigen Abstand vorgesehen sein, dass in einer Lücke zwei oder drei Fahrzeuge nebeneinander parkiert werden können.

Es ist aber auch denkbar, die Führungsschienen am Boden anzuordnen, wobei in diesem Fall die Weiche von unten schräg nach oben verlaufen muss, damit die Tragrahmen in der Lagerposition vertikal hängend nebeneinander an den Führungsschienen aufgehängt werden können.

Vorteilhaft greift die Antriebseinheit am vordersten Photovoltaikmodul an. Dies ist eine einfache und zweckmässige Konstruktion.

Vorteilhaft verfügt die Antriebseinheit über einen Elektromotor, eine vorzugsweise aufladbare, netzabhängige oder netzunabhängige Batterie, ein Getriebe und einen zweiten Typ eines Laufwagens mit Antriebsrädern, wobei der Elektromotor über das Getriebe die Antriebsräder antreibt. Mit einer solchen Antriebseinheit ist die erfindungsgemässe Photovoltaikanlage autark, sodass sie jederzeit aus- oder eingefahren werden kann.

Vorzugsweise verfügt der zweite Typ eines Laufwagens neben den Antriebsrädern noch über vorgespannte Anpressrolle, die so angeordnet ist, dass ein Schenkel des U-Profils zwischen den Laufflächen der Laufräder und der Anpressrolle aufgenommen ist, und mittels eines Federelements die Antriebsräder an die Lauffläche presst. Dadurch kann verhindert werden, dass die Antriebsräder durchdrehen.

Alternativ kann zwischen den Antriebsrädern der Antriebseinheit und der Führungsschiene auch eine Formschlussverbindung, z.B. über eine Zahnstange / Zahnrad oder Spurkranzrad, vorgesehen sein.

Vorteilhaft ist das Getriebe der Antriebseinheit auch über eine Handkurbel bewegbar. Dies hat den Vorteil, dass man im Notfall nicht auf einen Elektromotor und eine Batterie nicht angewiesen, um die Photovoltaikmodule zusammenzufahren.

Vorteilhaft ist als Behälter ein Standard-ISO-Container mit einer verschliessbaren Türe an einer Stirnseite verwendet.

### Kurzbeschreibung der Figuren

Nachfolgend wird die Erfindung beispielhaft unter Bezugnahme auf die Figuren beschrieben. Es zeigen schematisch:

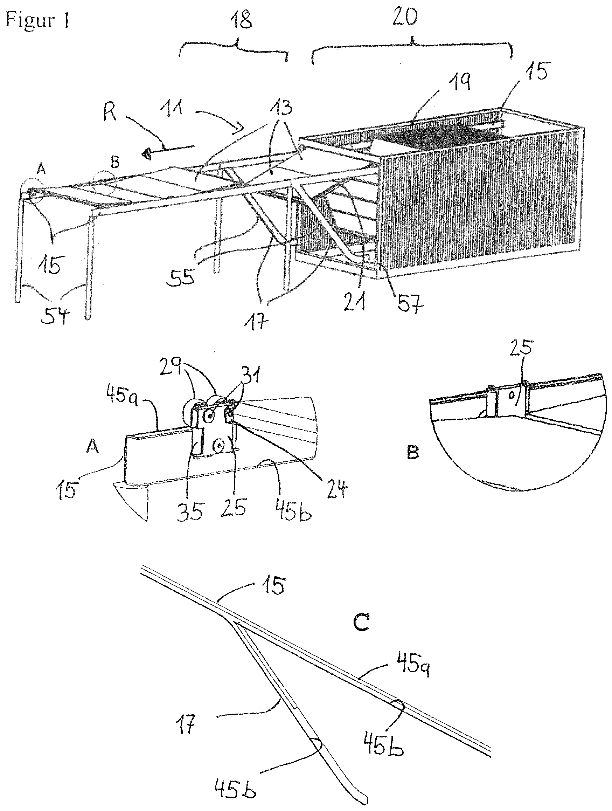

- Figur 1:: Eine Ausführungsform einer erfindungsgemässen Photovoltaikanlage mit einer Mehrzahl von Photovoltaikmodulen, die auf Tragrahmen montiert sind, seitlichen Führungsschienen für das Ausfahren der Module, und einem optionalen Container, in welchem die Photovoltaikmodule platzsparend senkrecht und parallel zueinander anordenbar sind, wobei vor dem Container ein Wendeabschnitt mit einer Weiche vorgesehen ist, die dem Verschwenken der Tragrahmen dient; das Detail A zeigt einen ersten Laufwagen, der auf einer oberen Lauffläche der Führungsschiene abrollt, Detail B einen Laufwagen, der auf einer unteren Lauffläche der Führungsschiene abrollt und Detail C die Weiche des Wendeabschnitts 18;
- Figur 2:: Zwei über Laufwagen gelenkig miteinander verbundene Tragrahmen mit den daran angeordneten Photovoltaikmodule;
- Figur 3:: An den Führungsschienen aufgehängte Tragrahmen mit Photovoltaikmodulen;
- Figur 4:: Schematisch den Vorgang des Ausfahrens der Photovoltaikmodule von der zusammengeschobenen Lagerposition in die ausgebreitete Arbeitsposition;
- Figur 5:: Mehrere Tragrahmen in der ausgebreiteten Arbeitsposition;
- Figur 6:: Einen oberen Laufwagen mit zwei Laufrädern und einem Gegenrad in perspektivischer Ansicht;
- Figur 7:: Eine Rückansicht des Laufwagens von Fig. 6;
- Figur 8:: Einen unteren Laufwagen mit zwei Laufrädern in perspektivischer Ansicht;
- Figur 9:: Eine Rückansicht des Laufwagens von Fig. 8;
- Figur 10:: Den Prozess des Auseinanderfahrens der Tragrahmen mit den Photovoltaikmodulen in perspektivischer Ansicht;
- Figur 11:: Den Endabschnitt der Photovoltaikanlage mit einer Antriebseinheit am Ende der Photovoltaikmodul-Anordnung;
- Figur 12:: Den Endabschnitt der Photovoltaikanlage aus einer anderen Perspektive; und
- Figur 13:: Einen perspektivischen Draufblick auf die Antriebseinheit.

### Beschreibung der Figuren

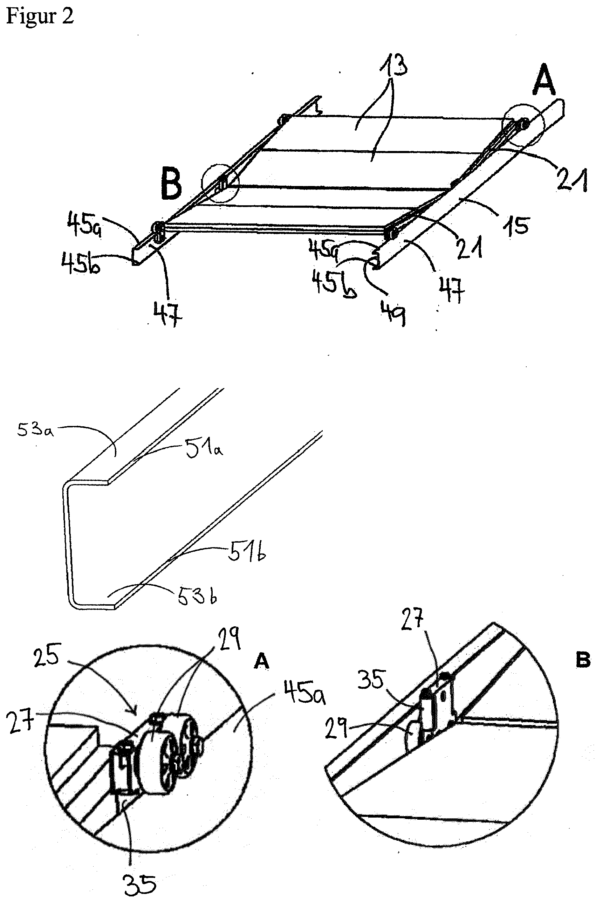

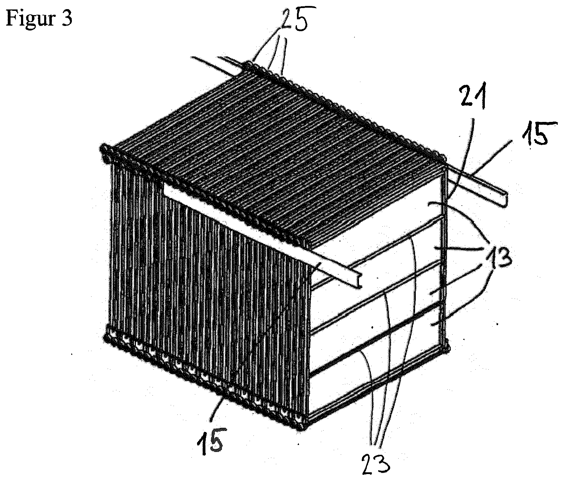

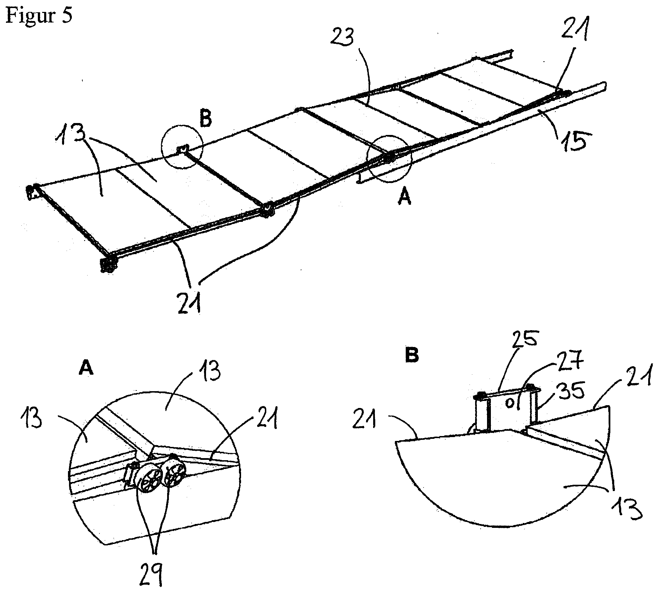

Die Fig. 1 bis 13 zeigen eine erfindungsgemässe Photovoltaikanlage 11, deren wesentlichen Merkmale sind: eine Vielzahl von miteinander gelenkig verbundenen Photovoltaikmodulen 13, seitliche Führungsschienen 15, auf denen die Photovoltaikmodule ausgebreitet werden können, und eine Weiche 17, mit welcher die Photovoltaikmodule 13 von einer senkrechten in eine ungefähr horizontale oder zur Horizontalen leicht geneigte Lage und umgekehrt überführt werden können.

Sind die Photovoltaikmodule vertikal parallel zueinander und in kurzen Abständen nebeneinander angeordnet, nehmen diese nur wenig Platz ein und können gemäss einer bevorzugten Ausführungsform der Erfindung in einem Container 19 platzsparend aufgenommen sein. Die Führungsschienen15 erstrecken sich daher bis in den Container hinein, während die Weiche 17 nur bis zum Container 19 reicht. Im Container 19 sind die Photovoltaikmodule 13 geschützt vor Unwettern, Vandalismus oder Diebstahl. Bei der Verwendung eines ISO-Containers kann die ganze Photovoltaikanlage auch leicht mit dem Lastwagen, der Eisenbahn oder dem Schiff transportiert werden. Selbstverständlich ist es auch möglich, anstelle eines Containers eine einfache Einhausung vorzusehen, insbesondere wenn die Anlage stationär sein soll.

An die Führungsschienen 15 schliesst sich ein Wendeabschnitt 18 und ein Lagerabschnitt 20 an, wobei letzterer bei Vorhandensein eines Containers 19 ungefähr der Länge desselben entspricht. Die Weiche 17 des Wendeabschnitts 18 hat vorzugsweise dasselbe Profil wie die Führungsschiene 15 und verläuft in Ausbreitungsrichtung R in einem Winkel von ungefähr 40 bis 50 Grad von unten nach oben. Zu beachten ist dabei, dass der erste Abschnitt der Weiche 17 nur eine untere Laufbahn 45b aufweist (z.B. als L-Profil anstatt als U-Profil ausgebildet ist), sodass sich die unteren Laufwagen beim Entfalten der PV-Module, das je nach Rollwiderstand nicht völlig kontrollierbar ist, von oben her auf die untere Laufbahn 45b aufsetzen können.

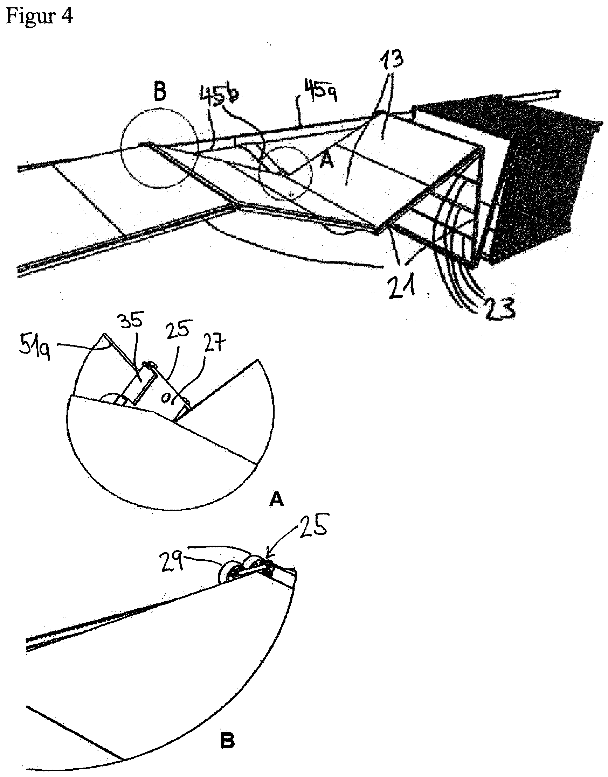

Die Photovoltaikmodule 13 sind auf einem rechteckigen Tragrahmen 21 montiert. Je nach erwarteter Belastung der Module, z.B. mit Schnee- oder Windlasten, kann der Tragrahmen 21 mehr oder weniger stark ausgeführt sein und eine oder mehrere Streben 23 aufweisen (Fig. 4).

Benachbarte Photovoltaikmodule 13 sind an einem Laufwagen 25 mittels Gelenken 24 miteinander verbunden. Ein Laufwagen 25 umfasst einen Tragkörper 27, an welchem auf der einen Seite zwei Laufräder 29 an einer Achse 31 frei drehbar angeordnet sind. Auf der gegenüberliegenden Seite des Tragkörpers 27 sind die Photovoltaikmodule 13 angelenkt. In einer bevorzugten Ausführungsform sind die Photovoltaikmodule 13 ebenfalls an der Achse 31 angeordnet. Das heisst, die Schwenkachse der Photovoltaikmodule 13 kann mit der Drehachse 39 der Laufräder 29 übereinstimmen. Dies ist eine einfache und kostengünstige Ausführungsform.

An den einander gegenüberliegenden schmalen Stirnseiten 33 des Tragkörpers sind je eine Laufrolle 35 drehbar angeordnet, deren Drehachse 37 sich senkrecht zur Drehachse 39 der Laufräder erstreckt. Die Laufrollen 35 sind so am Tragkörper 27 angeordnet, dass deren Laufflächen 41 über die Flachseite 43 des Tragkörpers 27 vorstehen, auf deren Seite die Laufräder 27 angeordnet sind.

Die Führungsschienen 15 stellen zwei separate und in senkrechtem Abstand voneinander angeordnete Laufbahnen 45a und 45b für die Laufwagen 25 zur Verfügung. Vorzugsweise bestehen die Führungsschienen 15 aus einem U-Profil 47, wobei die U-Profile mit den Öffnungen 49 gegeneinander orientiert sind. Die Führungsschienen 15 sind in einem Abstand voneinander angeordnet, der dem Abstand der an den Tragrahmen 21 angeordneten Laufwagen 25 entspricht. Damit können die Tragrahmen 21 mit den daran angeordneten Photovoltaikmodulen auf den Laufbahnen 45a und 45b mit geringem Rollwiderstand hin- und herbewegt werden.

Die an den Laufwagen 25 angeordneten Laufrollen 35 dienen der seitlichen Führung der Laufwagen 25. Die Laufrollen 35 sind so angeordnet, dass sie mit der Stirnseite 51a oder 51b eines U-Profilschenkels 53a oder 53b zusammenwirken können.

Auf den oberen und unteren Laufbahnen 45a, 45b können die gleichen Laufwagen 25 eingesetzt werden. Die oben beschriebenen Laufwagen 25 haben den Vorteil, dass diese auf der oberen Laufbahn 45a oder der unteren Laufbahn 45b verwendet werden können. Allerdings wird ist der untere Laufwagen 25 um 180 Grad gedreht, sodass die Laufrollen 35 ebenfalls mit der oberen Stirnseite 51a des oberen Schenkels 53a zwecks seitlicher Führung zusammenwirken können.

Gemäss der in den Figuren 1, 4 und 10 gezeigten Ausführungsform, wo die Photovoltaikmodule 13 im ausgefahrenen Zustand auf Stützen 54 angeordnet sind, laufen die beiden Laufbahnen 45a, 45b bei der Weiche 17 ausgehend vom Container 19 in den Führungsschienen 15 zusammen. Während die eine Laufbahn 45a in gleicher Höhe weiterläuft, führt die andere Laufbahn 45b über eine Schräge 55 vom unteren Niveau der unteren Laufwagen auf die zweite Laufbahn 45b des U-Profils

Damit die Photovoltaikmodule 13 sich beim Verschieben selbsttätig von der ungefähr horizontalen Lage in eine vertikale Lage drehen, sind die Laufwagen 25 abwechslungsweise entweder auf der oberen Laufbahn 45a oder der unteren Laufbahn 45b angeordnet. Dies führt dazu, dass die Tragrahmen 21 beim Verschieben entlang der Führungsschienen 19 sich im Bereich der Weiche 17 selbsttätig drehen. Beim Einfahren der Tragelemente fahren die auf der oberen Lauffläche 45a des C-Profils fahrenden Laufwagen in horizontaler Richtung in den Behälter 19. Währenddessen fahren die unteren Laufwagen auf der unteren Laufbahn 45b des C-Profils über die Weiche 17 nach unten, bis die Tragrahmen 21 mit den daran angeordneten Photovoltaikmodulen eine frei hängende vertikale Position einnehmen. Am Schluss hängen die Tragelemente 21 an den oberen Laufwagen 25, währenddem die unteren Laufwagen in der Luft hängen können. So werden die Tragrahmen 21 beim Zusammenschieben eigenständig hängend im Behälter19 positioniert, wobei der Abstand benachbarter Tragrahmen 21 voneinander durch die sich berührenden Laufwagen 25 definiert ist.

Wie aus den Figuren 1, 2, 4 und 5 ersichtlich ist, sind die Laufwagen 25, die auf der unteren Laufbahn 45b bewegen, um 180 Grad gedreht angeordnet. Dabei kann wie im Fall der auf der Laufbahn 45a angeordneten Laufwagen 25 der obere Schenkel 53a des U-Profils als seitliche Führung dienen. Selbstverständlich gibt es noch andere mögliche Ausgestaltungen, um eine Linearführung für die Tragrahmen 21 zu realisieren, die den gewünschten Zweck erfüllt.

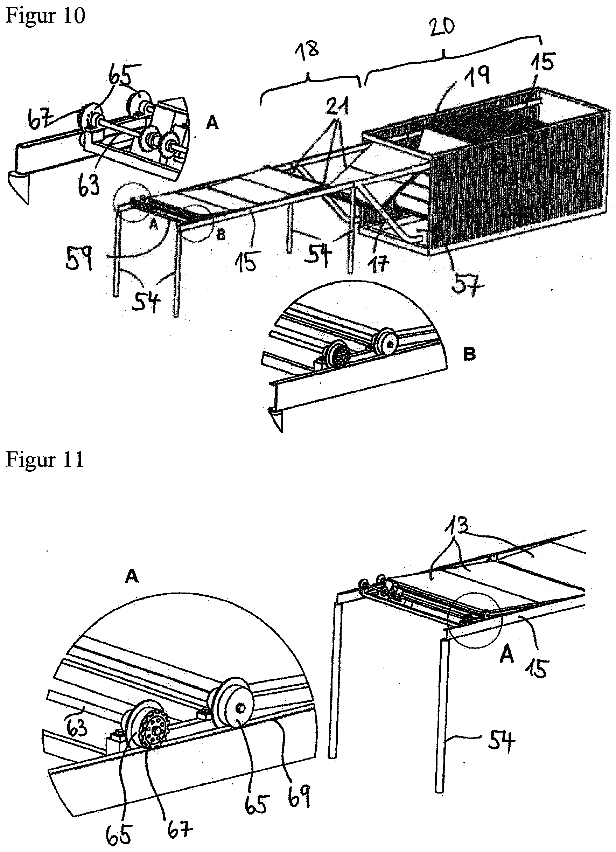

Eine andere mögliche, in den Figuren jedoch nicht dargestellte Ausführungsform der Erfindung sieht vor, dass sich die Führungsschienen 15 am Boden erstrecken, d.h. auf ungefähr gleichem Niveau wie der Behälterboden 57 (Figuren 1 und 10). In diesem Fall führt die obere Laufbahn 45a vor dem Behälter 19 schräg nach oben und erstreckt sich ganz in den Behälter 19 hinein, während die untere Laufbahn 45b beim Behältereingang enden kann. Diese Ausführungsform hat den Vorteil, dass keine aufwändigen Stützen benötigt werden, und die Anlage daher sehr schnell betriebsbereit gemacht werden kann.

Am vorderen Ende der Photovoltaikmodul-Anordnung ist eine Antriebseinheit 59 vorgesehen. Diese Antriebseinheit 59 zieht die Tragrahmen 21 beim Entfalten auseinander. Dabei wird jeweils ein einzelner Tragrahmen 21 über die Schräge 55 der Weiche 17 von der vertikalen in die liegende Position gezogen. Die Weiche 17 sorgt dafür, dass für das Entfalten der Photovoltaikmodul-Anordnung nur wenig Kraft benötigt wird, da jeweils nur ein einzelnes Tragelement 21 verschwenkt wird und dies sich auf der Laufbahn 45b abstützt.

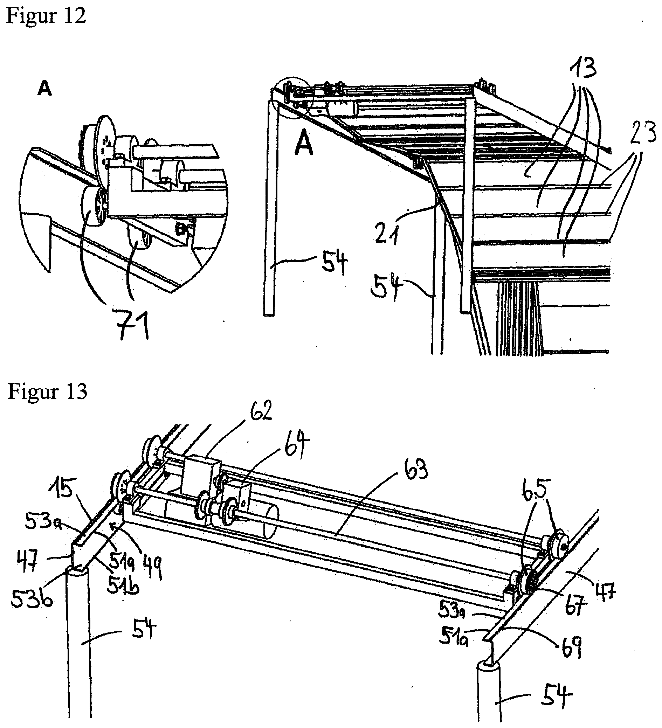

Die Antriebseinheit 59 umfasst einen Wagen 61 mit mindestens zwei und vorzugsweise vier Rädern, wovon zwei Antriebsräder 65 sind, an welchem Wagen 61 ein Elektromotor 62 mit dazugehörender, aufladbarer Batterie 64 (Figur 13) für den Antrieb einer Antriebswelle 63 vorgesehen ist. An den einander gegenüberliegenden Enden der Antriebswelle 63 ist je ein Antriebsrad 65 angeordnet. Die beiden Antriebsräder 65 laufen, wie auch die Laufräder der Laufwagen 25, auf den Laufbahnen 45a der Führungsschienen 15. Damit die Antriebsräder 65 nicht durchdrehen, kann an diesen ein Zahnrad 67 angeordnet sein, das mit einer auf den Führungsschienen 15 vorgesehenen Zahnstange 69 zwecks besserer Traktion zusammenwirken kann (Figur 11).

Alternativ oder zusätzlich können mit Federkraft vorgespannte Anpressrollen 71 vorgesehen sein (Figur 12), welche mit der Unterseite der Laufbahn 45a zusammenwirken und die Antriebsräder 65 an die Führungsschiene 15 pressen. Solche Anpressrollen 71 können auch bei einem Teil oder allen oberen Laufwagen 25 vorgesehen sein. Diese verhindern, dass sich die Tragelemente 21 bei starkem Wind von den Führungsschienen abheben können.

Die aufladbare Batterie 64 wird vorzugsweise durch den gewonnenen Solarstrom aufgeladen, sodass die Antriebseinheit 59 immer funktionsbereit und die Anlage damit autark ist.

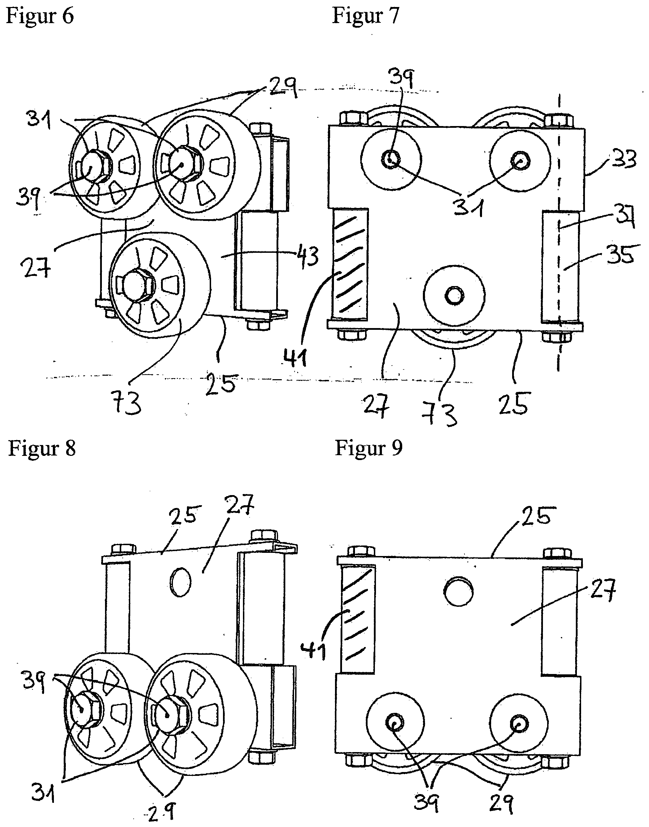

Gemäss einer vorteilhaften Ausführungsform können die Laufwagen 25 noch ein weiteres Laufrad 73 im Abstand von den beiden Laufrädern 29 aufweisen (Figuren 6 und 7). Das zusätzliche Laufrad 73 ist einem solchen Abstand von den beiden Laufrädern 29 angeordnet, dass die Laufbahn 45a oder 45b zwischen diesen mit geringem Spiel aufgenommen ist. Dadurch kann sichergestellt werden, dass sich die Tragrahmen 21 mit den Photovoltaikmodulen 13 bei starkem Wind aus den Führungsschienen 15 gehoben werden.

Die Photovoltaikanlage wird wie folgt verwendet: Für den Transport ist die voll funktionsfähige Photovoltaikanlage zusammen mit der Antriebseinheit in einem ISO-Container aufgenommen, in welchem auch die Wechselrichter und die Steuerung untergebracht sind. Nachdem der Container am gewünschten Ort aufgestellt ist, werden Stützen aufgestellt und die Führungsschienen auf den Stützen montiert. Danach wird an die Führungsschienen die Weiche angebaut, welche diese mit den Führungsschienen im Container verbindet. Sobald dies geschehen ist, können die Photovoltaikmodule ausgefahren werden.

Eine erfindungsgemässe Photovoltaikanlage verfügt über eine Mehrzahl von in einer Reihe anordenbaren und an einem Tragrahmen 21 montierten Photovoltaikmodule 13. Benachbarte Photovoltaikmodule 13 mit ihren Tragrahmen 21 sind mittels Gelenken oder Scharnieren gelenkig miteinander verbunden und von einem ausgebreiteten Zustand in einen zusammengeschobenen, kompakten Zustand und umgekehrt überführbar. Eine Antriebseinheit 59 ermöglicht, die Photovoltaikmodule 13 vom kompakten in den ausgebreiteten Zustand und umgekehrt zu überführen. Die Tragstruktur umfasst ein erstes Führungsschienenpaar aus zwei im Abstand voneinander angeordneten Führungsschienen 15. Seitlich an den Photovoltaikmodulen 13 respektive an den Tragrahmen 21 sind frei drehbare Laufräder 29 angeordnet, deren gegenseitiger Abstand voneinander mit dem Abstand der einander gegenüberliegenden Führungsschienen 15 übereinstimmt, sodass die Photovoltaikmodule 13 mit geringem Rollwiderstand in Richtung der Führungsschienen 15 ausgebreitet oder zusammengefahren werden können.

### Legende

- 11: Photovoltaikanlage
- 13: Photovoltaikmodule
- 15: Führungsschienen
- 17: Weiche
- 18: Wendeabschnitt
- 19: Container
- 20: Lagerabschnitt
- 21: Tragrahmen
- 23: Streben der Tragrahmen 21
- 24: Gelenk
- 25: Laufwagen
- 27: Tragkörper
- 29: Laufräder
- 31: Achse
- 33: Schmale Stirnseite
- 35: Laufrolle
- 37: Drehachse der Laufrollen
- 39: Drehachse der Laufräder
- 41: Lauffläche der Laufrolle
- 43: Flachseite
- 45a, 45b: Laufbahnen
- 47: U-Profil
- 49: Öffnung des U-Profils
- 51a, 51b: Stirnseite der Schenkel des U-Profils
- 53a, 53b: Schenkel des U-Profils
- 54: Stützen
- 55: Schräge
- 57: Behälterboden
- 59: Antriebseinheit
- 61: Wagen der Antriebseinheit
- 62: Elektromotor
- 63: Antriebswelle
- 64: aufladbare Batterie
- 65: Antriebsrad
- 67: Zahnrad
- 69: Zahnstange
- 71: Anpressrollen
- 73: Drittes Laufrad des Laufwagens 25

## Patentansprüche

1. Photovoltaikanlage, mit
- einer Mehrzahl von in einer Reihe anordenbaren und an einem Tragrahmen (21) montierten Photovoltaikmodulen (13),
- wobei benachbarte Photovoltaikmodule (13) mit ihren Tragrahmen (21) mittels Gelenken gelenkig miteinander verbunden sind und von einem im Wesentlichen gestreckten, flachen oder leicht geneigten Zustand in einen zusammengeschobenen, kompakten Zustand und umgekehrt überführbar sind,
- einer Tragstruktur für die Photovoltaikmodule (13), und
- einer Antriebseinheit (59), um die Photovoltaikmodule (13) vom kompakten in den gestreckten Zustand und umgekehrt zu überführen,
- wobei die Tragstruktur ein erstes Führungsschienenpaar aus zwei im Abstand voneinander angeordneten Führungsschienen (15) umfasst, und seitlich an den Photovoltaikmodulen (13) respektive an den Tragrahmen (21) Führungselemente (29) angeordnet sind, deren gegenseitiger Abstand voneinander mit dem Abstand der einander gegenüberliegenden Führungsschienen (15) übereinstimmt,
an die Führungsschienen (15) ein Wendeabschnitt (18) und ein Lagerabschnitt (20) anschliessen, wobei der Lagerabschnitt (20) so bemessen ist, dass die Photovoltaikmodule (13) senkrecht nebeneinander anordenbar sind,
und der Wendeabschnitt (18) ausgebildet ist, um einen Tragrahmen (21) mit den daran angeordneten Photovoltaikmodule (13) von der senkrechten in eine im Wesentlichen horizontale oder leicht geneigte Lage zu überführen, und umgekehrt
**dadurch gekennzeichnet, dass**
die Tragrahmen (21) der Photovoltaikmodule im Lagerabschnitt (20) frei hängend an den Führungsschienen (15) angeordnet sind und die Führungselemente frei drehbare Laufräder (29) und zusätzlich mindestens eine und vorzugsweise zwei frei drehbare Laufrollen (35) sind, deren Drehachsen (37) senkrecht zu einer durch die Führungsschienen (15) gehenden Ebene verlaufen und der seitlichen Führung der Photovoltaikmodule (13) am Laufwagen (25) dienen, sodass die Photovoltaikmodule (13) mit nur geringem Rollwiderstand in Richtung der Führungsschienen (15) ausgebreitet oder zusammengefahren werden können.

2. Photovoltaikanlage nach Anspruch 1, **dadurch gekennzeichnet, dass** zwei benachbarte Tragrahmen (21) jeweils über zwei vorzugsweise laterale Laufwagen (25) gelenkig miteinander verbunden sind.

3. Photovoltaikanlage nach Anspruch 2, **dadurch gekennzeichnet, dass** der Laufwagen (25) einen Tragkörper (27) und mindestens ein oder mehrere (29), vorzugsweise zwei oder drei am Tragkörper (27) angeordnete Laufräder (29) umfasst, deren Drehachse parallel zu einer durch die Führungsschienen (15) gehenden Ebene verläuft.

4. Photovoltaikanlage nach einem Anspruch 2 oder 3, **dadurch gekennzeichnet, dass** die Schwenkachsen der Photovoltaikmodule (13) sich parallel im Abstand von der Drehachse (39) des Laufrades befinden.

5. Photovoltaikanlage nach einem der Ansprüche 1 bis 4, **dadurch gekennzeichnet, dass** die Führungsschienen (15) U-Profile (47) sind, wobei die Schenkel (53a, 53b) der U-Profile erste und zweite Laufbahnen (45a, 45b) für die Laufräder bilden, wobei im Betrieb die Schenkel (53a, 53b) des U-Profils vorzugsweise mit den Laufrollen (35) des Laufwagens (25) zusammenwirken.

6. Photovoltaikanlage nach einem der Ansprüche 2 bis 5, **dadurch gekennzeichnet, dass** in Richtung der Führungsschienen (15) die Laufwagen (25) alternierend auf der ersten und der zweiten Laufbahn (45a, 45b) angeordnet sind.

7. Photovoltaikanlage nach einem der Ansprüche 1 bis 6, **dadurch gekennzeichnet, dass** die Laufbahn (45b) des Wendeabschnitts (18) vor dem Lagerabschnitt endet, und zumindest teilweise im Bereich der Weiche (17) freiliegend ist.

8. Photovoltaikanlage nach einem der Ansprüche 5 bis 7, **dadurch gekennzeichnet, dass** zumindest der Einlauf in den Wendeabschnitt die erste oder zweite Laufbahn (45a) oder (45b) von der anderen Laufbahn (45b) oder (45a) weg- oder hinleitet.

9. Photovoltaikanlage nach einem der Ansprüche 1 bis 8, **dadurch gekennzeichnet, dass** ein Behälter (19), insbesondere ein Standard-Transportcontainer, vorgesehen ist, der mindestens die Länge des nötigen Lagerabschnitts für die vertikale Anordnung der Photovoltaikmodule (13) aufweist.

10. Photovoltaikanlage nach einem der vorangehenden Ansprüche, **dadurch gekennzeichnet, dass** die Führungsschienen (15) auf in Abstand voneinander angeordneten Stützen (54) montiert sind.

11. Photovoltaikanlage nach einem der vorangehenden Ansprüche, **dadurch gekennzeichnet, dass** die Führungsschienen (15) am Boden angeordnet sind und die Weiche (17) schräg nach oben verläuft.

12. Photovoltaikanlage nach einem der vorangehenden Ansprüche, **dadurch gekennzeichnet, dass** die Antriebseinheit (59) am vordersten Photovoltaikmodul angreift, wobei diese über einen Elektromotor, eine vorzugsweise aufladbare, netzabhängige oder vorzugsweise netzunabhängige Batterie, ein Getriebe und Antriebsräder (65) verfügt, wobei der Elektromotor über das Getriebe die Antriebsräder antreibt.

13. Photovoltaikanlage nach einem der vorangehenden Ansprüche, **dadurch gekennzeichnet, dass** die Antriebseinheit (59) neben den Antriebsrädern (65) noch über vorgespannte Anpressrolle verfügt, die so angeordnet ist, dass ein Schenkel des U-Profils zwischen den Laufflächen der Laufräder und der Anpressrolle aufgenommen ist, und mittels eines Federelements die Antriebsräder an die Lauffläche presst.

14. Photovoltaikanlage nach einem der vorangehenden Ansprüche, **dadurch gekennzeichnet, dass** das Getriebe der Antriebseinheit (59) auch über eine Handkurbel bewegbar ist.

## Claims

1. Photovoltaic system, with
- a plurality of photovoltaic modules (13), which can be arranged in series and mounted on a support frame (21),
- wherein adjacent photovoltaic modules (13) with their support frames (21) are connected to one another in an articulated manner by means of joints, and can be transferred from an essentially extended, flat or slightly inclined state, into a pushed-together, compact state, and vice versa,
- a support structure for the photovoltaic modules (13), and
- a drive unit (59) to transfer the photovoltaic modules (13) from the compact into the extended state, and vice versa,
- wherein the support structure comprises a first pair of guide rails consisting of two guide rails (15) arranged at a separation distance from one another, and guide elements (29) are arranged laterally on the photovoltaic modules (13) and on the support frames (21) respectively, the mutual separation distance between which corresponds to the separation distance between the opposing guide rails (15), a turning section (18) and a storage section (20) are connected to the guide rails (15), wherein the storage section (20) is dimensioned such that the photovoltaic modules (13) can be arranged vertically next to one another, and the turning section (18) is designed to transfer a support frame (21), with the photovoltaic modules (13) arranged thereon, from the vertical to an essentially horizontal, or slightly inclined, position, and vice versa,
**characterised in that**,
the support frames (21) of the photovoltaic modules in the storage section (20) are arranged freely suspended on the guide rails (15), and the guide elements are running wheels (29) that can freely rotate, and in addition at least one, and preferably two, running rollers (35) that can freely rotate, whose axes of rotation (37) extend at right angles to a plane passing through the guide rails (15), and serve to guide the photovoltaic modules (13) laterally on the carriage (25), such that the photovoltaic modules (13) can be expanded or moved together in the direction of the guide rails (15) with only slight rolling resistance.

2. Photovoltaic system in accordance with Claim 1, **characterised in that**, two adjacent support frames (21) are in each case connected to one another in an articulated manner, by way of two preferably lateral carriages (25).

3. Photovoltaic system in accordance with Claim 2, **characterised in that**, the carriage (25) comprises a support body (27), and at least one or a plurality of (29), preferably two or three, running wheels (29) arranged on the support body (27), the axis of rotation of which running wheels runs parallel to a plane passing through the guide rails (15).

4. Photovoltaic system in accordance with Claim 2 or 3, **characterised in that**, the pivot axes of the photovoltaic modules (13) are located parallel to, at a separation distance from, the axis of rotation (39) of the running wheel.

5. Photovoltaic system in accordance with one of the Claims 1 to 4, **characterised in that**, the guide rails (15) are U-profiles (47), wherein the legs (53a, 53b) of the U-profiles form first and second running tracks (45a, 45b) for the running wheels, wherein in operation the legs (53a, 53b) of the U-profile preferably interact with the running rollers (35) of the carriage (25).

6. Photovoltaic system in accordance with one of the Claims 2 to 5, **characterised in that**, in the direction of the guide rails (15) the carriages (25) are arranged alternately on the first and second running tracks (45a, 45b) .

7. Photovoltaic system in accordance with one of the Claims 1 to 6, **characterised in that**, the running track (45b) of the turning section (18) terminates in front of the storage section, and is at least partially exposed in the region of the switch (17).

8. Photovoltaic system in accordance with one of the Claims 5 to 7, **characterised in that**, at least the inlet into the turning section guides the first or second running track (45a) or (45b) away from, or towards, the other running track (45b) or (45a).

9. Photovoltaic system in accordance with one of the Claims 1 to 8, **characterised in that**, a container (19), in particular a standard transport container, is provided, which has at least the length of the storage section necessary for the vertical arrangement of the photovoltaic modules (13).

10. Photovoltaic system in accordance with one of the preceding claims, **characterised in that**, the guide rails (15) are mounted on supports (54) arranged at a separation distance from one another.

11. Photovoltaic system in accordance with one of the preceding claims, **characterised in that**, the guide rails (15) are arranged on the ground, and the switch (17) runs obliquely upwards.

12. Photovoltaic system in accordance with one of the preceding claims, **characterised in that**, the drive unit (59) engages with the foremost photovoltaic module, wherein the former has an electric motor, a preferably rechargeable, grid-dependent, or preferably grid-independent, battery, a transmission, and drive wheels (65), wherein the electric motor drives the drive wheels by way of the transmission.

13. Photovoltaic system in accordance with one of the preceding claims, **characterised in that**, in addition to the drive wheels (65), the drive unit (59) also has a pre-loaded pressure application roller, which is arranged such that one leg of the U-profile is accommodated between the running surfaces of the running wheels and the pressure application roller, and by means of a spring element presses the drive wheels against the running surface.

14. Photovoltaic system in accordance with one of the preceding claims, **characterised in that**, the transmission of the drive unit (59) can also be moved by way of a hand crank.

## Revendications

1. Installation photovoltaïque avec
- une pluralité de modules photovoltaïques (13) pouvant être disposés en rangées et montés sur un cadre porteur (21),
- sachant que les modules photovoltaïques (13) voisins sont reliés entre eux à leurs cadres porteurs (21) de façon articulée au moyen d'articulations et peuvent être transférés d'un état pour l'essentiel étendu, plat et légèrement incliné à un état comprimé compact et vice versa,
- une structure porteuse pour les modules photovoltaïques (13), et
- une unité d'entraînement (59) pour transférer les modules photovoltaïques (13) d'un état compact à un état étendu et vice versa,
- sachant que la structure porteuse comprend une première paire de rails de guidage composée de deux rails de guidage (15) disposés à distance l'un de l'autre et des éléments de guidage (29) sont disposés latéralement sur les modules photovoltaïques (13) par rapport au cadre porteur (21), dont la distance réciproque l'un de l'autre correspond à la distance des rails de guidage (15) opposés l'un à l'autre, une section de renversement (18) et une section de support (20) se raccordent aux rails de guidage (15), sachant que la section de support (20) est dimensionnée de telle manière que les modules photovoltaïques (13) peuvent être disposés perpendiculairement l'un à côté de l'autre, et la section de retournement (18) est constituée pour transférer un cadre porteur (21) avec les modules photovoltaïques (13) disposés dessus d'une position perpendiculaire dans une position pour l'essentiel horizontale ou légèrement inclinée et vice versa,
**caractérisée en ce que**
les cadres porteurs (21) des modules photovoltaïques dans la section de support (20) sont disposés librement suspendus aux rails de guidage (15) et les éléments de guidage sont des roues mobiles (29) pouvant librement tourner et en plus au moins un et de préférence deux galets de roulement (35) pouvant librement tourner, dont les axes de rotation (37) passent perpendiculairement à un plan passant par les rails de guidage (15) et servent au guidage latéral des modules photovoltaïques (13) sur le chariot (25) de telle sorte que les modules photovoltaïques (13) ne peuvent être étendus ou réunis qu'avec une faible résistance de roulement en direction des rails de guidage (15).

2. Installation photovoltaïque selon la revendication 1, **caractérisée en ce que** deux cadres porteurs (21) voisins sont respectivement reliés entre eux de façon articulée par deux chariots (25) de préférence latéraux.

3. Installation photovoltaïque selon la revendication 2, **caractérisée en ce que** le chariot (25) comprend un corps porteur (27) et au moins une ou plusieurs (29), de préférence deux ou trois roues mobiles (29) disposées sur le corps porteur (27), dont l'axe de rotation passe parallèlement à un plan passant par les rails de guidage (15) .

4. Installation photovoltaïque selon l'une quelconque des revendications 2 ou 3, **caractérisée en ce que** les axes de pivotement des modules photovoltaïques (13) se trouvent parallèles à distance de l'axe de rotation (39) de la roue mobile.

5. Installation photovoltaïque selon l'une quelconque des revendications 1 à 4, **caractérisée en ce que** les rails de guidage (15) sont des profilés en U (47), sachant que les branches (53a, 53b) des profilés en U forment une première et une deuxième piste de roulement (45a, 45b) pour les roues mobiles, sachant qu'en fonctionnement, les branches (53a, 53b) du profilé en U coopèrent de préférence avec les galets de roulement (35) du chariot (25).

6. Installation photovoltaïque selon l'une quelconque des revendications 2 à 5, **caractérisée en ce que** les chariots (25) sont disposés en alternance sur la première et la deuxième piste de roulement (45a, 45b) en direction des rails de guidage (15).

7. Installation photovoltaïque selon l'une quelconque des revendications 1 à 6, **caractérisée en ce que** la piste de roulement (45b) de la section de retournement (18) se termine avant la section de support et repose librement au moins en partie dans la zone de l'aiguillage (17).

8. Installation photovoltaïque selon l'une quelconque des revendications 5 à 7, **caractérisée en ce qu'**au moins l'arrivée dans la section de retournement détourne ou engage la première ou deuxième piste de roulement (45a) ou (45b) de l'autre piste de roulement (45b) ou (45a).

9. Installation photovoltaïque selon l'une quelconque des revendications 1 à 8, **caractérisée en ce qu'**un conteneur (19), en particulier un conteneur de transport standard, est prévu, qui comporte au moins la longueur de la section de support nécessaire pour la disposition verticale des modules photovoltaïques (13).

10. Installation photovoltaïque selon l'une quelconque des revendications précédentes, **caractérisée en ce que** les rails de guidage (15) sont montés sur des supports (54) disposés à distance l'un de l'autre.

11. Installation photovoltaïque selon l'une quelconque des revendications précédentes, **caractérisée en ce que** les rails de guidage (15) sont disposés au fond et l'aiguillage (17) passe de façon inclinée vers le haut.

12. Installation photovoltaïque selon l'une quelconque des revendications précédentes, **caractérisée en ce que** l'unité d'entraînement (59) vient en prise sur le module photovoltaïque le plus avancé, sachant que celui-ci dispose d'un moteur électrique, d'une batterie de préférence chargeable, dépendante du réseau ou de préférence indépendante du réseau, d'une transmission et de roues d'entraînement (65), sachant que le moteur électrique entraîne les roues d'entraînement par le biais de la transmission.

13. Installation photovoltaïque selon l'une quelconque des revendications précédentes, **caractérisée en ce que** l'unité d'entraînement (59) dispose en plus des roues d'entraînement (65) également de galets de pression précontraints, qui sont disposés de telle manière qu'une branche du profilé en U est logée entre les surfaces de roulement des roues mobiles et du galet de pression et appuie les roues d'entraînement à la surface de roulement au moyen d'un élément faisant ressort.

14. Installation photovoltaïque selon l'une quelconque des revendications précédentes, **caractérisée en ce que** la transmission de l'unité d'entraînement (59) peut être également déplacée par le biais d'une manivelle.
